(19)

Europäisches Patentamt

European Patent Office

Office européen des brevets

(11)   **EP 4 576 077 A1**

(12)                    **EUROPEAN PATENT APPLICATION**

(43) Date of publication:
**25.06.2025 Bulletin 2025/26**

(21) Application number: **23218614.8**

(22) Date of filing: **20.12.2023**

(51) International Patent Classification (IPC):
**G10L 21/0208** (2013.01)    **H04R 25/00** (2006.01)

(52) Cooperative Patent Classification (CPC):
**G10L 21/0208; G06N 3/045; G06N 3/048;**
**G06N 3/084; H04R 25/507**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **GN Hearing A/S**
**2750 Ballerup (DK)**

(72) Inventor: **MOWLAEE, Pejman**
**2750 Ballerup (DK)**

(74) Representative: **Zacco Denmark A/S**
**Arne Jacobsens Allé 15**
**2300 Copenhagen S (DK)**

(54)   **METHOD FOR PROCESSING AUDIO DATA IN AN AUDIO DEVICE BY USING A NEURAL NETWORK**

(57)    Disclosed is a computer-implemented method for processing audio data in an audio device by using a neural network, the neural network is defined by its topology including its number of layers and its number of nodes, where each node has an activation function. The method comprises obtaining first audio data. The method comprises obtaining an input, wherein the input comprises one or more of the following: input from an audio engineer tuning the audio device; input from a user of the audio device defining a preference; an audiogram for a user of the audio device; and device characteristics of the audio device. The method comprises, based on the input, adapting the activation function(s) of the one or more nodes of the neural network, while maintaining the topology of the neural network, thereby allowing the neural network to adapt in a computationally efficient way. The method comprises processing the first audio data, into processed audio data, by using the neural network with the adapted activation function(s). The method comprises outputting the processed audio data.

<u>200</u>

Fig. 2

## Description

FIELD

The present invention relates to a computer-implemented method for processing audio data in an audio device by using a neural network, the neural network is defined by its topology including its number of layers and its number of nodes, where each node has an activation function. More specifically, the disclosure relates to a method comprising obtaining audio data and obtaining an input, e.g. from a user.

BACKGROUND

In the field of audio processing, it is well-known to use neural networks. By way of example, it is known to use neural networks to improve speech intelligibility. Another example is to use neural networks for noise reduction. One reason for using neural networks for applications like this is that there are several parameters to take into consideration and also that there are both linear and non-linear dependencies between the different parameters.

Even though neural networks have proven to be successful in different aspects of audio processing, it comes with a computational cost. For instance, if a neural network should be used for a large variety of sound environments, for a large variety of devices etc, the neural network has to be expanded to be able to handle all possible combinations. The downside of this added complexity is that there is an increased computational cost, that is, a number of processor operations required is increased.

Another problem with using neural networks is that adapting or tuning audio devices using neural networks for audio processing is difficult, often impossible. Since the neural network used for solving complex problems is not designed for being tuned, the only option to adapt the neural network is often re-training the neural network with a different set of training data.

For the reasons provided above, there is a need to find a balance between the benefits of using neural networks for solving non-linear multiple parameters problems, keeping the computational cost at a reasonable level and also provide for that the devices using neural networks for audio processing can be adapted to meet e.g. specific user needs.

In the literature of neural networks, an activation function may be used to provide the nonlinearity which plays a significant role in the decision-making of the underlying network in a real-world application. While numerous well-established activation functions, such as ReLU, Sigmoid, Linear, etc, have been quite often applied over the years, more recently there has been a renewed interest in the research community to investigate activation functions that can lead to improve the neural network performance.

A survey of the available activation functions can be found in "Activation Functions in Deep Learning: A Comprehensive Survey and Benchmark" by S. R. Dubey et al., Neurocomputing, and more modern trainable activation functions can be found "A survey on modern trainable activation functions" by A. Apicella et al., Neural Networks 138 (2021) 14-32.

However, there is a need for an improved computer-implemented method for processing audio data in an audio device by using a neural network.

SUMMARY

Disclosed is a computer-implemented method for processing audio data in an audio device by using a neural network. The neural network is defined by its topology including its number of layers and its number of nodes, where each node has an activation function.

The method comprises obtaining first audio data.

The method comprises obtaining an input, wherein the input comprises one or more of the following: input from an audio engineer tuning the audio device; input from a user of the audio device defining a preference; an audiogram for a user of the audio device; and device characteristics of the audio device.

The method comprises, based on the input, adapting the activation function(s) of the one or more nodes of the neural network, while maintaining the topology of the neural network, thereby allowing the neural network to adapt in a computationally efficient way.

The method comprises processing the first audio data, into processed audio data, by using the neural network with the adapted activation function(s).

The method comprises outputting the processed audio data.

The processed audio data may have improved sound quality and may reduce noise in the audio signal. The method may be e.g. be applicable to deep noise suppression, to deep echo suppression, to bandwidth extension etc.

The method may be performed during actual use of the audio device by a user, e.g. when using a headset for phone calls, using a hearing aid for hearing compensation, using a speakerphone for audio conferences etc.

The method may also be performed during set-up/tuning of the audio device, such as tuning by an audio engineer preparing the audio device for use, or a user setting-up the audio device before use such as for setting-up preferences for gain, volume etc.

The audio device may be a device for capturing and/or processing and/or outputting audio data, such as audio signals, sounds etc. Sounds may be captured by one or more input transducers, such as microphones. Sound may be processed by a processing unit. Sounds may be outputted by an output transducer, such as a speaker, loud speaker, receiver etc. The audio device may be a headset, a speakerphone, a hearing device, a hearing aid, s smartphone etc.

The audio data may be obtained by a microphone of the audio device. The audio data may be obtained by a microphone of another device than the audio device, e.g a far-end headset. Thus, the audio data may originate from the surroundings of the audio device, and/or may originate from another location than the audio device. Thus, the audio data may originate from many different sources, and thus the audio data does not need to be received by a microphone of the audio device. For example, the audio data may be coming from a far-end device, such as from a far-end caller in a phone call. The audio data may be a sound signal.

The method comprises obtaining an input, wherein the input comprises one or more of the following: input from an audio engineer tuning the audio device; input from a user of the audio device defining a preference; an audiogram for a user of the audio device; and device characteristics of the audio device. Thus, the input may be an input made by a person, e.g. the user of the audio device or an employee manufacturing the audio device, such as an audio engineer tuning the audio device before use. The input may alternatively and/or additionally be input in the form of an audiogram defining a hearing loss of the user. The input may alternatively and/or additionally be device characteristic of the audio device, such as device characteristics of a headset, a speakerphone, a hearing aid etc.

For example, in case of the input being user input being from an audio engineer, the engineer may pick a specific function or similar from a code bank.

For example, in case of the input being user input defining a preference, the user may undergo one or more listening test where the user rates an audio clip and based on the rating, an activation function is selected, e.g., the user may listen to the same audio clip processed with different activation functions and rate these, and the audio clip with the highest rating and the associated activation function is selected.

For example, in case of the input being an audiogram, the activation function may be bounded based on the hearing profile of the user.

For example, in case the input is a device characteristics, the device characteristics may be determined based on which type of device the audio device. E.g. if the audio device is a speakerphone then the device characteristics may be specific for a speakerphone, and if the audio device is a headset then the device characteristics may be specific for a headset, and if the audio device is a hearing aid then the device characteristics may be specific for a hearing aid etc.

Thus, obtaining the input may be before use of the audio device, i.e. when setting-up/tuning the audio device, e.g. obtaining input from an audio engineer tuning the audio device may be before use; obtaining input from a user of the audio device defining a preference may be before or during use; obtaining input being an audiogram for a user of the audio device may be before use; and obtaining input being device characteristics of the audio device may also be before use.

Obtaining input may thus be before use or during use of the audio device, and the examples above are all before use, however obtaining input from a user of the audio device defining a preference may also be during use, where the user can change a setting if the audio output is not as desired.

An artificial neural network is used for processing the audio data. The neural network is defined by its topology including its number of layers and its number of nodes, where each node has an activation function. Artificial neural networks may be used for solving artificial intelligence (AI) problems; they model connections of biological neurons as weights between nodes. A positive weight reflects an excitatory connection, while negative values mean inhibitory connections. All inputs are modified by a weight and summed. This activity is referred to as a linear combination. Finally, an activation function controls the amplitude of the output. For example, an acceptable range of output is usually between 0 and 1, or it could be -1 and 1. These artificial networks may be used for predictive modeling, adaptive control and applications where they can be trained via a dataset. Typically, nodes or neurons are aggregated into layers. Different layers may perform different transformations on their inputs. Signals travel from the first layer (the input layer), to the last layer (the output layer), possibly after traversing the layers multiple times.

The method comprises, based on the input, adapting the activation function(s) of the one or more nodes of the neural network, while maintaining the topology of the neural network, thereby allowing the neural network to adapt in a computationally efficient way. Thus, based on the input, an activation function is adapted, such as selected, changed, updated etc. Thus the "default" activation function may be changed to another activation function, or the "default" activation function may be adapted e.g. by adapting some parameters, values etc of the activation function. The purpose is to find a suitable activation function depending on the situation, this suitable activation function may then replace the activation function the neural network already has to thereby try to enhance the performance of the neural network, without having to retrain the neural network or change the topology of the neural network. In some cases the activation function may only be associated with the last node in the output layer of the neural network. Thus, the neutral network can handle different sound environments, different device characteristics, different user preferences etc, in a computationally efficient way.

In some embodiments, adapting the activation function(s) of the one or more nodes of the neural network, while maintaining the topology of the neural network, comprises selecting an activation function from a codebook comprising a plurality of activation functions based on the input, and associating the selected activation function with the one or more nodes of the neural network. Associating the selected activation function with the one or more nodes of the neural network may be understood as inserting the selected activation function in the one or more nodes of the neural network.

In some embodiments, adapting the activation function(s) of the one or more nodes of the neural network, while maintaining the topology of the neural network, comprises determining one or more parameters associated with the activation function based on the input. For example, the activation function may be a parametrized function such as a parametric ReLU function:

$$f(y) = \max(0, y) + \alpha \min(0, y)$$

where y is the weighted sum input to a node, and a is a parameter which may be determined based on the input, e.g., the parameter may be determined based on the input provided by an audio engineer. Although ReLU is specifically mentioned, other parametric functions such as a parametric sigmoid or similar may be equally viable.

In some embodiments, adapting the activation function(s) of the one or more nodes of the neural network, while maintaining the topology of the neural network, comprises synthesizing an activation function based on the input.

The method comprises processing the first audio data, into processed audio data, by using the neural network with the adapted activation function(s). Thus, the audio data will be processed by using the neural network, and due to the adapted, and preferably optimized, activation functions, the processed audio data may be improved.

The method comprises outputting the processed audio data.

It is an advantage of the present method and audio device that it provides to modify the achievable performance of the neural network at run-time without modifying the neural network topology. By maintaining the topology of the neural network, an extra condition may be added. Put differently, instead of allowing the neural network to add nodes and/or layers, the topology is set. Put differently, the neural network is trained not only to process the audio data into the output signal by using the training data, but also to do so for the topology being selected. An effect of having the topology set, or selected, is that the computational cost can be predicted more accurately. This in turn provides for that hardware can be adapted accordingly. Having the hardware adapted provides in turn for that the computational efficiency can be improved

It is an advantage that this may be achieved by changing the activation function to something that has been learned for the use-case scenario faced during inference. For example, during certificate tests for audio device products, one could see this impact only by changing the activation function to a learned one from ROM (Read Only Memory) hence range the run-time performance depending on what the end-user intends or depending on certificate requirements.

It is an advantage that no modification of the neutral network topology is needed.

It is an advantage of the present method and audio device that it may improve signal processing, it may improve a target signal, it may reduce noise in an audio signal etc.

It is an advantage that it is not needed to change the neural network, and it is not needed to add layers of the neural network.

It is an advantage that less processing of audio data may be required, and therefore less power consumption, such as less battery use, may be needed.

According to an aspect, disclosed is an audio device comprising a processor, and a memory, wherein the audio device is configured for performing the method disclosed above and in the following.

In some embodiments, the method comprises:

- obtaining second audio data;
- determining one or more characteristic values based on the second audio data, wherein the one or more characteristic values are related to a sound environment; and
- based on the input and on the determined one or more characteristic values, adapting the activation function(s) of the one or more nodes of the neural network, while maintaining the topology of the neural network, thereby allowing the neural network to adapt in a computationally efficient way.

The second audio data may be audio signals. The first audio data and the second audio data may be the same or different audio data. The first audio data and the second audio data may be the same when tuning/setting up the audio device. The first audio data and the second audio data may be different when using the audio device, e.g. during inference.

The second audio data may be received via a microphone, e.g. a microphone of the audio device, or a microphone of another device, e.g. far-end device.

One or more characteristic values are determined based on the second audio data.

The characteristic values are related to the sound environment where the second audio data is obtained from. The sound environment may be a location, a place, such as outdoor, such as indoor, such as windy conditions outdoor, such as silent indoor. The sound environment may be a noisy restaurant, a noisy office space, a room with echo, a reverberant room. The sound environment may be defined by a signal-to-noise ratio. The sound environment may be a car, where the user us having a phone call. The sound environment may be where a microphone is capturing the second audio data, and/or where the user or audio device is located etc. The sound environment may be important for determining the level of noise, level of speech, level of echo etc. A sound event detection module may be implemented in the audio device for determining when and which kind of sound is present in the environment.

The characteristic values may be a sound level, a noise level, a speech level, an amplitude, a frequency etc. of the audio data.

Based on the input and on the determined one or more characteristic values, the activation function(s) are adapted to provide an improved processed sound.

In some embodiments, the activation function is selected in a code bank comprising a plurality of activations functions, and the code bank optionally also comprising coefficients associated with activations functions, and/or bounding coefficients.

Thus, unlike other neural network applications in the field of audio processing, specific activation functions can be adapted, that is, changed or replaced, after the neural network has been trained. By having the topology of the neural network set, that is, fixed, it is made possible to provide for that code banks can be made with different activation function packages linked to different tuning options.

In some embodiments, the activation function code bank comprises at least one or more of the following activation functions:

- ReLU;
- tanh;
- sigmoid;
- linear; and/or
- identity.

In some embodiments,

- when the input comprises input from an audio engineer, the audio engineer selects a specific activation function from the code bank to test the specific activation function;
- when the input comprises input from a user defining a preference, the user undergoes one or more listening tests, where the user rates an audio clip and based on the rating, a specific activation function is selected; and/or
- when the input comprises an audiogram for the user of the audio device, the activation function is bounded based on the hearing profile of the user.

When the input comprises input from a user defining a preference, the user undergoes one or more listening tests, where the user rates an audio clip and based on the rating, a specific activation function is selected, for example the user may listen to the same audio clip processed with different activation function and rate these and the audio clip with the highest rating and the associated activation function is then selected.

In some embodiments, the first audio data, or one or more characteristic values based on the first audio data, is provided as a further input to the activation function code bank to further guide the selection of an activation function.

For example, if the first audio data is a reverberant sound signal it may help guide the selection of the activation function, if an audio engineer has defined for reverberant signal that a particular activation function should be used, or if a user has shown a preference for a particular activation function for a reverberant signal.

In some embodiments, the activation function(s) are adapted based on the first audio data, or one or more characteristic values based on the first audio data.

For example, if the first audio data is a reverberant sound signal it may help guide the selection of the activation function, if an audio engineer has defined for reverberant signal that a particular activation function should be used, or if a user has shown a preference for a particular activation function for a reverberant signal. Other characteristics, such as noise or echo, of the first audio signal may also be associated with different activation function based on the input provided by an audio engineer or a user of the audio device. In some embodiments, the method comprises determining one or more nodes of the neural network to be adapted based on the one or more characteristic values. The one or more characteristic values may be based on either the first audio data or the second audio data.

In some embodiments, the method comprises:

in response to obtaining the first audio data, determining if the activation function(s) provides an undesired processed audio data output,
if affirmative, determining the one or more nodes of the activation function(s) to be adapted, and adapting the activation functions of the nodes, and processing the audio data,
else, processing the audio data without adapting the neural network, and outputting the processed audio data.

Thus, this embodiment may explain the decision of when it is relevant to adapt the activation functions. The activation functions may be adapted in case the activation functions being set during set-up/tuning do not deliver satisfying results. For example, a specific sound environment may not have been tested during set-up/tuning of the audio device, such as a very reverberant room, and then the method may determine if the activation functions being set already are suitable or not for this specific sound environment. For example, a specific device characteristics of the audio device may provide that the activation function provides a desired or undesired processed audio data output, and if the output is undesired, the activation functions are adapted.

In some embodiments, the activation functions are associated solely with nodes of the output layer of the neural network. This is an advantage, because this may be most impactful, because the output layer, i.e. last layer, of the neural network may be directly related to the mask, thus it may be enough with just the output layer. This may save processing power by not making more calculations than necessary.

In other cases, the activations functions may not be associated solely with the nodes of the output layer of the neural network. The one or more activation functions may be associated with nodes of the input layer of the neural network. The one or more activation functions may be associated with nodes of one or more intermediary layers of the neural network..

In some embodiments, adapting the activation functions is at least partly based on the first audio data received via a microphone of the audio device. Thus, adapting the activation functions may be based on the first audio data. The first audio data is received via a microphone of the audio device. Adaption of the activation functions may also be based on other things, such as the input, e.g. user input, as defined above. Above it is disclosed that the activation functions are adapted based on the input, however as defined in the present embodiment, the activation functions may not be fully determined based on the input, but may also be determined based on the first audio data.

In some embodiments, the one or more characteristic values comprises a first set related to the sound environment, and/or a second set related to a device characteristic of the audio device, and/or a third set related to a user preference set by a user of the audio device, wherein the characteristic values used for determining the one or more nodes to be adapted is the first set, the second set, the third set or any combination thereof.

For example, a first sound environment may be a reverberant room having a first set of specific characteristic values, and a second sound environment may be a sound-proof room having another first set of other specific characteristic values. Echo, reverberation, and voice activity may be examples of the first set.

For example, a first device characteristics may be a speakerphone having a second set of specific characteristic values, and a second device characteristics may be a headset room having another second set of other specific characteristic values, and a third device characteristics may be a hearing aid having yet another second set of other specific characteristic values.

For example, a first user preference may be a specific gain setting having a third set of specific characteristic values, and a second user preference may be a specific frequency range having another third set of other specific characteristic values.

In some embodiments, the one or more characteristic values comprise a fourth set related to data transmission effects, such as a signal-to-noise ratio, wherein the characteristic values used for determining the one or more nodes to be adapted is the first set, the second set, the third set, the fourth set or any combination thereof.

In some embodiments, the one or more characteristic values comprises a fifth set related to the first audio data and/or a sixth set related to the second audio data, wherein the characteristic values used for determining the one or more nodes to be adapted is the first set, the second set, the third set, the fourth set, the fifth set, the sixth set or any combination thereof.

In some embodiments, a first set of coefficients are defined/determined for each of the first set of characteristic values, and/or wherein a second set of coefficients are defined/determined for each of the second set of characteristic values, and/or wherein a third set of coefficients are defined/determined for each of the third set of characteristic values, and/or wherein a fourth set of coefficients are defined/determined for each of the fourth set of characteristic values, and/or wherein a fifth set of coefficients are defined/determined for each of the fifth set of characteristic values, and/or wherein a sixth set of coefficients are defined/determined for each of the sixth set of characteristic values.

In an embodiment, an audio device is configured to be worn by a user. The audio device may be arranged at the user's ear, on the user's ear, over the user's ear, in the user's ear, in the user's ear canal, behind the user's ear and/or in the user's concha, i.e., the audio device is configured to be worn in, on, over and/or at the user's ear. The user may wear two audio devices, one audio device at each ear. The two audio devices may be connected, such as wirelessly connected and/or connected by wires, such as a binaural hearing aid system.

The audio device may be a hearable such as a headset, headphone, earphone, earbud, hearing aid, a personal sound amplification product (PSAP), an over-the-counter (OTC) hearing device, a hearing protection device, a one-size-fits-all hearing device, a custom hearing device or another head-wearable hearing device. Hearing devices can include both prescription devices and non-prescription devices.

The audio device may be embodied in various housing styles or form factors. Some of these form factors are Behind-the-Ear (BTE) hearing device, Receiver-in-Canal (RIC) hearing device, Receiver-in-Ear (RIE) hearing device or Microphone-and-Receiver-in-Ear (MaRIE) hearing device. Some of these form factors are earbuds, on the ear headphones or over the ear headphones. The person skilled in the art is well aware of different kinds of audio/hearing devices and of different options for arranging the audio/hearing device in, on, over and/or at the ear of the audio/hearing device wearer.

In an embodiment, the audio device may comprise one or more input transducers. The one or more input transducers may comprise one or more microphones. The one or more input transducers may comprise one or more vibration sensors configured for detecting bone vibration. The one or more input transducer(s) may be configured for converting an acoustic signal into a first electric input signal. The first electric input signal may be an analogue signal. The first electric input signal may be a digital signal. The one or more input transducer(s) may be coupled to one or more analogue-to-digital converter(s) configured for converting the analogue first input signal into a digital first input signal.

In an embodiment, the audio device may comprise one or more antenna(s) configured for wireless communication. The one or more antenna(s) may comprise an electric antenna. The electric antenna may be configured for wireless communication at a first frequency. The first frequency may be above 800 MHz, preferably a wavelength between 900 MHz and 6 GHz. The first frequency may be 902 MHz to 928 MHz. The first frequency may be 2.4 to 2.5 GHz. The first frequency may be 5.725 GHz to 5.875 GHz. The one or more antenna(s) may comprise a magnetic antenna. The magnetic antenna may comprise a magnetic core. The magnetic antenna may comprise a coil. The coil may be coiled around the magnetic core. The magnetic antenna may be configured for wireless communication at a second frequency. The second frequency may be below 100 MHz. The second frequency may be between 9 MHz and 15 MHz.

In an embodiment, the audio device may comprise one or more wireless communication unit(s). The one or more wireless communication unit(s) may comprise one or more wireless receiver(s), one or more wireless transmitter(s), one or more transmitter-receiver pair(s) and/or one or more transceiver(s). At least one of the one or more wireless communication unit(s) may be coupled to the one or more antenna(s). The wireless communication unit may be configured for converting a wireless signal received by at least one of the one or more antenna(s) into a second electric input signal. The audio device may be configured for wired/wireless audio communication, e.g. enabling the user to listen to media, such as music or radio and/or enabling the user to perform phone calls.

In an embodiment, the wireless signal may originate from one or more external source(s) and/or external devices, such as spouse microphone device(s), wireless audio transmitter(s), smart computer(s) and/or distributed microphone array(s) associated with a wireless transmitter. The wireless input signal(s) may origin from another audio device, e.g., as part of a binaural hearing system and/or from one or more accessory device(s), such as a smartphone and/or a smart watch.

In an embodiment, the audio device may include a processing unit. The processing unit may be configured for processing the first and/or second electric input signal(s). The processing may comprise compensating for a hearing loss of the user, i.e., apply frequency dependent gain to input signals in accordance with the user's frequency dependent hearing impairment. The processing may comprise performing feedback cancelation, beamforming, tinnitus reduction/masking, noise reduction, noise cancellation, speech recognition, bass adjustment, treble adjustment and/or processing of user input. The processing unit may be a processor, an integrated circuit, an application, functional module, etc. The processing unit may be implemented in a signal-processing chip or a printed circuit board (PCB). The processing unit may be configured to provide a first electric output signal based on the processing of the first and/or second electric input signal(s). The processing unit may be configured to provide a second electric output signal. The second electric output signal may be based on the processing of the first and/or second electric input signal(s).

In an embodiment, the audio device may comprise an output transducer. The output transducer may be coupled to the processing unit. The output transducer may be a receiver. It is noted that in this context, a receiver may be a loudspeaker, whereas a wireless receiver may be a device configured for processing a wireless signal. The receiver may be configured for converting the first electric output signal into an acoustic output signal. The output transducer may be coupled to the processing unit via the magnetic antenna. The output transducer may be comprised in an ITE unit or in an earpiece, e.g. Receiver-in-Ear (RIE) unit or Microphone-and-Receiver-in-Ear (MaRIE) unit, of the audio device. One or more of the input transducer(s) may be comprised in an ITE unit or in an earpiece.

In an embodiment, the wireless communication unit may be configured for converting the second electric output signal into a wireless output signal. The wireless output signal may comprise synchronization data. The wireless communication unit may be configured for transmitting the wireless output signal via at least one of the one or more antennas.

In an embodiment, the audio device may comprise a digital-to-analogue converter configured to convert the first electric output signal, the second electric output signal and/or the wireless output signal into an analogue signal.

In an embodiment, the audio device may comprise a power source. The power source may comprise a battery providing a first voltage. The battery may be a rechargeable battery. The battery may be a replaceable battery. The power source may comprise a power management unit. The power management unit may be configured to convert the first voltage into a second voltage. The power source may comprise a charging coil. The charging coil may be provided by the magnetic antenna.

In an embodiment, the audio device may comprise a memory, including volatile and non-volatile forms of memory.

The present invention relates to different aspects including the method and audio device described above and in the following, and corresponding method and device parts, each yielding one or more of the benefits and advantages described in connection with the first mentioned aspect, and each having one or more embodiments corresponding to the embodiments described in connection with the first mentioned aspect and/or disclosed in the appended claims.

BRIEF DESCRIPTION OF THE DRAWINGS

The above and other features and advantages will become readily apparent to those skilled in the art by the following detailed description of exemplary embodiments thereof with reference to the attached drawings, in which:

Fig. 1 schematically illustrates a prior art method.

Fig. 2 schematically illustrates an exemplary computer-implemented method 200 for processing audio data in an audio device by using a neural network.

Fig. 3 schematically illustrates an exemplary computer-implemented method 300 for processing audio data in an audio device by using a neural network.

Fig. 4 schematically illustrates an exemplary activation function code bank 402.

Fig. 5 schematically illustrates an exemplary neural network 502 defined by its topology including its number of layers 504 and its number of nodes 506, where each node 506 has an activation function.

Fig. 6 schematically illustrates an exemplary node 606 of a neural network 602, and an activation function f(z) 608 of the node 606.

DETAILED DESCRIPTION

Various embodiments are described hereinafter with reference to the figures. Like reference numerals refer to like elements throughout. Like elements will, thus, not be described in detail with respect to the description of each figure. It should also be noted that the figures are only intended to facilitate the description of the embodiments. They are not intended as an exhaustive description of the claimed invention or as a limitation on the scope of the claimed invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

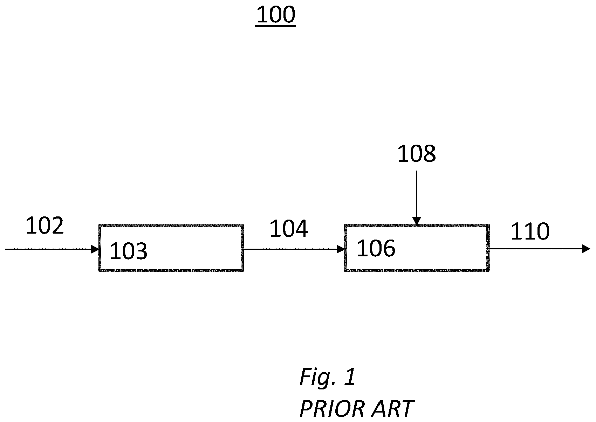

Fig. 1 schematically illustrates a prior art method. The prior art method 100 shows a tuning process as it is performed in prior art. In the prior art process of tuning, an input signal 102, e.g. an audio signal, is provided to a trained neural network 103. The trained neural network 103 outputs a first output signal 104, e.g. a processed audio signal. The first output signal 104 is then provided to a post-processor 106, and a user input 108 is also provided to the post-processor 106, e.g. a user input 108 provided by an audio engineer. Thus, the post-processor 106 is used by audio engineers to tune the processing pipeline, so it fulfils the specification as set out by for example Microsoft Teams™ or similar audio/video conference software. After the post-processing of the signal, a second output signal 110 is outputted, e.g. by a speaker in an audio device.

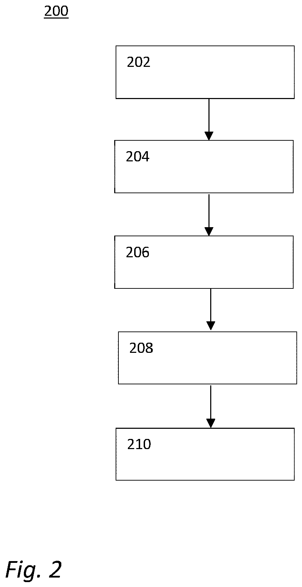

Fig. 2 schematically illustrates an exemplary computer-implemented method 200 for processing audio data in an audio device by using a neural network. The neural network is defined by its topology including its number of layers and its number of nodes, where each node has an activation function.

The method 200 comprises obtaining 202 first audio data.

The method 200 comprises obtaining 204 an input, wherein the input comprises one or more of the following: input from an audio engineer tuning the audio device; input from a user of the audio device defining a preference; an audiogram for a user of the audio device; and device characteristics of the audio device.

The method 200 comprises, based on the input, adapting 206 the activation function(s) of the one or more nodes of the neural network, while maintaining the topology of the neural network, thereby allowing the neural network to adapt in a computationally efficient way.

The method 200 comprises processing 208 the first audio data, into processed audio data, by using the neural network with the adapted activation function(s).

The method 200 comprises outputting 210 the processed audio data.

By maintaining the topology of the neural network, an extra condition is added. Put differently, instead of allowing the neural network to add nodes and/or layers, the topology is set. Put differently, the neural network is trained not only to process the audio data into the output signal by using the training data, but also to do so for the topology being selected. An effect of having the topology set, or selected, is that the computational cost can be predicted more accurately. This in turn provides for that hardware can be adapted accordingly. Having the hardware adapted provides in turn for that the computational efficiency can be improved.

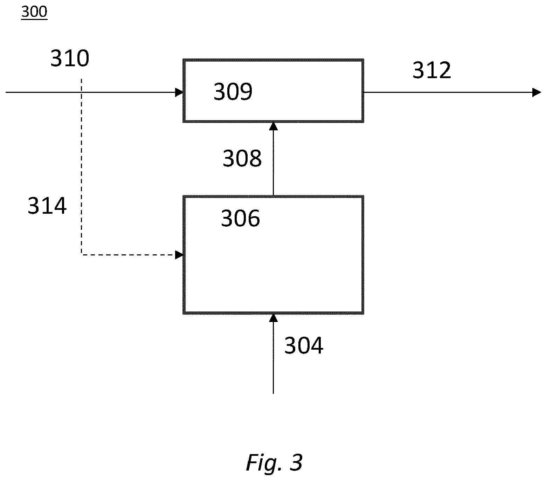

Fig. 3 schematically illustrates an exemplary computer-implemented method 300 for processing audio data in an audio device by using a neural network. The neural network is defined by its topology including its number of layers and its number of nodes, where each node has an activation function.

The method 300 comprises obtaining 304 an input, wherein the input comprises one or more of the following: input from an audio engineer tuning the audio device; input from a user of the audio device defining a preference; an audiogram for a user of the audio device; and device characteristics of the audio device. The input, e.g. user input, is provided to an activation function code bank 306. Based on the input, an activation function is selected in the code bank. The selected activation function is passed 308 to a trained neural network 309, where the selected activation function is then associated with one or more predetermined nodes of the trained neural network.

The method 300 comprises obtaining 310 first audio data, e.g. an audio input signal. The audio data, e.g. input signal, is provided to the trained neural network 309 which then process the audio data with the adapted activation functions and provides an output signal 312.

In case of the input being from an audio engineer, the engineer may pick a specific function or similar from the code bank. In case of the input being a user preference, the user may undergo one or more listening test where the user rates an audio clip and based on the rating an activation function is selected, e.g., the user may listen to the same audio clip processed with different activation function and rate these and the audio clip with the highest rating and the associated activation function is selected. In case of the input being an audiogram, the activation function may be bounded based on the hearing profile of the user. The input can also relate to device specifics.

Consequently, activation function is learned/selected which suits to a scenario or the desires of a user or an audio engineer.

The activation function may be selected in the code bank, which may comprise a plurality of activations functions, and the code bank may optionally also comprise coefficients associated with activations functions, and/or bounding coefficients.

The activation function code bank may comprise at least one or more of the following activation functions:

- ReLU;
- tanh;
- sigmoid;
- linear; and/or
- identity.

Fig. 3 also schematically illustrates that the first audio data 310, or one or more characteristic values based on the first audio data, may be provided 314 as a further input to the activation function code bank 306 to further guide the selection of an activation function.

As shown, the audio signal, e.g. input signal or parameters of the input signal, may also be provided as an input to the code bank to further guide the selection of an activation function, e.g., if the input signal is reverberant it may help guide the selection of the activation function if the audio engineer has defined for reverberant signal this activation function should be used, or if a user has shown a preference for an activation function for a reverberant signal.

As illustrated in fig. 3, unlike other neural network applications in the field of audio processing, specific activation functions can be adapted, that is, changed or replaced, after the neural network has been trained. By having the topology of the neural network set, that is, fixed, it is made possible to provide for that code banks can be made with different activation function packages linked to different tuning options.

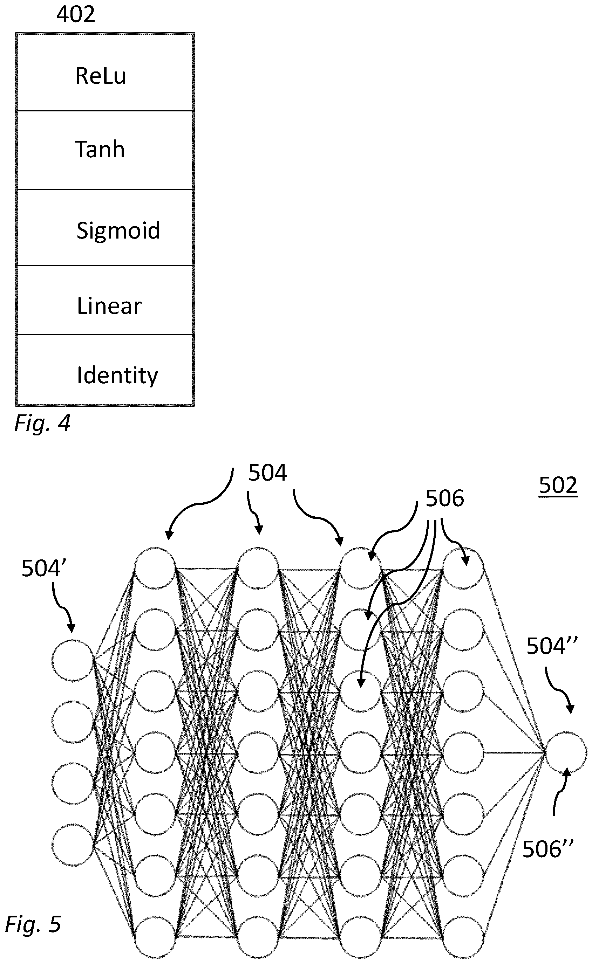

Fig. 4 schematically illustrates an exemplary activation function code bank 402. As shown the content of the code bank may be different types of activation functions, such as ReLU, tanh, sigmoid, linear, and/or identity. The code bank may also comprise coefficients associated with activation functions, bounding coefficients, or similar.

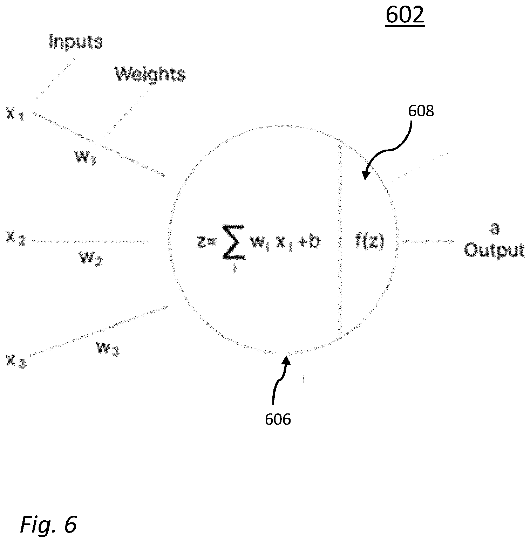

Fig. 5 schematically illustrates an exemplary neural network 502 defined by its topology including its number of layers 504 and its number of nodes 506, where each node 506 has an activation function (see fig. 6). The input layer 504' is shown to the left. The output layer 504" is shown to the right. In between the input layer 504' and the output layer 504", one or more further layers 504 are shown. It is understood that there may be any number of layers 504. In some cases, the activation functions may be associated solely with node(s) 506" of the output layer 504" of the neural network 502.

Fig. 6 schematically illustrates an exemplary node 606 of a neural network 602. An activation function f(z) 608 of a node 606 in an artificial neural network 602 is a function that calculates the output a of the node 606, based on its inputs $x1, x2, x3$ etc, and the weights $w1, w2, w3$ etc on individual inputs.

Thus, fig. 5 and fig. 6 schematically illustrates an artificial neural network 502, 602, which is used for processing audio data. The neural network is defined by its topology including its number of layers 504 and its number of nodes 506, 606, where each node has an activation function 608. Artificial neural networks may be used for solving artificial intelligence (AI) problems; they model connections of biological neurons as weights between nodes. A positive weight reflects an excitatory connection, while negative values mean inhibitory connections. All inputs are modified by a weight and summed. This activity is referred to as a linear combination. Finally, an activation function controls the amplitude of the output. For example, an acceptable range of output is usually between 0 and 1, or it could be -1 and 1. These artificial networks may be used for predictive modeling, adaptive control and applications where they can be trained via a dataset. Typically, nodes or neurons are aggregated into layers. Different layers may perform different transformations on their inputs. Signals travel from the first layer (the input layer), to the last layer (the output layer), possibly after traversing the layers multiple times.

Although particular features have been shown and described, it will be understood that they are not intended to limit the claimed invention, and it will be made obvious to those skilled in the art that various changes and modifications may be made without departing from the scope of the claimed invention. The specification and drawings are, accordingly to be regarded in an illustrative rather than restrictive sense. The claimed invention is intended to cover all alternatives, modifications and equivalents.

ITEMS:

1. A computer-implemented method for processing audio data in an audio device by using a neural network, the neural network is defined by its topology including its number of layers and its number of nodes, where each node has an activation function, said method comprising:

- obtaining first audio data,
- based on the input, adapting the activation function(s) of the one or more nodes of the neural network, while maintaining the topology of the neural network, thereby allowing the neural network to adapt in a computationally efficient way,
- processing the first audio data, into processed audio data, by using the neural network with the adapted activation function(s), and
- outputting the processed audio data.

2. The method according to item 1, wherein the method comprises:

- obtaining second audio data;
- determining one or more characteristic values based on the second audio data, wherein the one or more characteristic values are related to a sound environment; and
- based on the input and on the determined one or more characteristic values, adapting the activation function(s) of the one or more nodes of the neural network, while maintaining the topology of the neural network, thereby allowing the neural network to adapt in a computationally efficient way.

3. The method according to any of items 1 or 2, wherein the activation function is selected in a code bank comprising a plurality of activations functions, and the code bank optionally also comprising coefficients associated with activations functions, and/or bounding coefficients.

4. The method according to any of the preceding items, wherein the activation function code bank comprises at least one or more of the following activation functions:

- ReLU;
- tanh;
- sigmoid;
- linear; and/or

- identity.

5. The method according to any of the preceding items, wherein:

- when the input comprises input from an audio engineer, the audio engineer selects a specific activation function from the code bank to test the specific activation function;
- when input comprises input from a user defining a preference, the user undergoes one or more listening tests, where the user rates an audio clip and based on the rating, a specific activation function is selected; and/or
- when the input comprises an audiogram for the user of the audio device, the activation function is bounded based on the hearing profile of the user.

6. The method according to items 3-5, wherein the first audio data, or one or more characteristic values based on the first audio data, is provided as a further input to the activation function code bank to further guide the selection of an activation function.

7. The method according to any of items 2-6, wherein the method comprises:

- determining one or more nodes of the neural network to be adapted based on the one or more characteristic values.

8. The method according to any of the preceding items, comprising:

in response to obtaining the first audio data, determining if the activation function(s) provides an undesired processed audio data output, if affirmative, determining the one or more nodes of the activation function(s) to be adapted, and adapting the activation functions of the nodes, and processing the audio data, else, processing the audio data without adapting the neural network, and outputting the processed audio data.

9. The method according to any of the preceding items, wherein the activation functions are associated solely with nodes of the output layer of the neural network.

10. The method according to any of the preceding items, wherein adapting the activation functions is at least partly based on the first audio data received via a microphone of the audio device.

11. The method according to any of the preceding items, wherein the one or more characteristic values comprises a first set related to the sound environment, and/or a second set related to a device characteristic of the audio device, and/or a third set related to a user preference set by a user of the audio device, wherein the characteristic values used for determining the one or more nodes to be adapted is the first set, the second set, the third set or any combination thereof.

12. The method according to the preceding item, wherein the one or more characteristic values comprise a fourth set related to data transmission effects, such as a signal-to-noise ratio wherein the characteristic values used for determining the one or more nodes to be adapted is the first set, the second set, the third set, the fourth set or any combination thereof.

13. The method according to the preceding item, wherein the one or more characteristic values comprises a fifth set related to the first audio data and/or a sixth set related to the second audio data, wherein the characteristic values used for determining the one or more nodes to be adapted is the first set, the second set, the third set, the fourth set, the fifth set, the sixth set or any combination thereof.

14. The method according to items 11, 12 or 13, wherein a first set of coefficients are defined/determined for each of the first set of characteristic values, and/or wherein a second set of coefficients are defined/determined for each of the second set of characteristic values, and/or wherein a third set of coefficients are defined/determined for each of the third set of characteristic values, and/or wherein a fourth set of coefficients are defined/determined for each of the fourth set of characteristic values, and/or wherein a fifth set of coefficients are defined/determined for each of the fifth set of characteristic values, and/or wherein a sixth set of coefficients are defined/determined for each of the sixth set of characteristic values.

15. The method according to any of the preceding items, wherein adapting the activation function(s) of the one or more nodes of the neural network, while maintaining the topology of the neural network, comprises selecting an activation function from a codebook comprising a plurality of activation functions based on the input, and associating the selected activation function with the one or more nodes of the neural network.

16. The method according to the preceding item, wherein associating the selected activation function with the one or more nodes of the neural network comprises inserting the selected activation function in the one or more nodes of the neural network.

17. The method according to any of the preceding items, wherein adapting the activation function(s) of the one or more nodes of the neural network, while maintaining the topology of the neural network, comprises determining one or more parameters associated with the activation function based on the input.

18. The method according to the preceding item, wherein the activation function is a parametrized function such as a parametric ReLU function:

$$f(y) = \max(0, y) + \alpha \min(0, y)$$

where y is the weighted sum input to a node, and $\alpha$ is a parameter which is determined based on the input.

19. The method according to any of the preceding items, wherein adapting the activation function(s) of the one or more nodes of the neural network, while maintaining the topology of the neural network, comprises synthesizing an activation function based on the input.

20. An audio device comprising a processor, and a memory, wherein the audio device is configured for performing the method according to any of items 1-19.

LIST OF REFERENCES

100 prior art method
102 signal
103 trained neural network
104 first output signal
106 post-processor
108 user input
110 second output signal
200 computer-implemented method
202 obtaining first audio data
204 obtaining an input
206 adapting the activation function(s) of the one or more nodes of the neural network
208 processing the first audio data
210 outputting the processed audio data
300 computer-implemented method
304 obtaining an input
306 activation function code bank
308 passing selected activation function
309 trained neural network
310 obtaining first audio data
312 output signal
314 providing first audio data as a further input to the activation function code bank
402 activation function code bank
502 neural network

504 layers
504' input layer
504" output layer
506 nodes
506" node(s) of the output layer
602 neural network
606 node
608 activation function f(z)
x1, x2, x3 inputs
w1, w2, w3 weights
a output

**Claims**

1. A computer-implemented method for processing audio data in an audio device by using a neural network, the neural network is defined by its topology including its number of layers and its number of nodes, where each node has an activation function, said method comprising:

   - obtaining first audio data,
   - based on the input, adapting the activation function(s) of the one or more nodes of the neural network, while maintaining the topology of the neural network, thereby allowing the neural network to adapt in a computationally efficient way,
   - processing the first audio data, into processed audio data, by using the neural network with the adapted activation function(s), and
   - outputting the processed audio data.

2. The method according to claim 1, wherein the method comprises:

   - obtaining second audio data;
   - determining one or more characteristic values based on the second audio data, wherein the one or more characteristic values are related to a sound environment; and
   - based on the input and on the determined one or more characteristic values, adapting the activation function(s) of the one or more nodes of the neural network, while maintaining the topology of the neural network, thereby allowing the neural network to adapt in a computationally efficient way.

3. The method according to any of claims 1 or 2, wherein the activation function is selected in a code bank comprising a plurality of activations functions, and the code bank optionally also comprising coefficients associated with activations functions, and/or bounding coefficients.

4. The method according to any of the preceding claims, wherein the activation function code bank comprises at least one or more of the following activation functions:

   - ReLU;
   - tanh;
   - sigmoid;
   - linear; and/or
   - identity.

5. The method according to any of the preceding claims, wherein:

   - when the input comprises input from an audio engineer, the audio engineer selects a specific activation function from the code bank to test the specific activation function;
   - when input comprises input from a user defining a preference, the user undergoes one or more listening tests, where the user rates an audio clip and based on the rating, a specific activation function is selected; and/or
   - when the input comprises an audiogram for the user of the audio device, the activation function is bounded based on the hearing profile of the user.

6. The method according to claims 3-5, wherein the first audio data, or one or more characteristic values based on the first audio data, is provided as a further input to the activation function code bank to further guide the selection of an activation function.

7. The method according to any of claims 2-6, wherein the method comprises:

   - determining one or more nodes of the neural network to be adapted based on the one or more characteristic values.

8. The method according to any of the preceding claims, comprising:

   in response to obtaining the first audio data, determining if the activation function(s) provides an undesired processed audio data output, if affirmative, determining the one or more nodes of the activation function(s) to be adapted, and adapting the activation functions of the nodes, and processing the audio data, else, processing the audio data without adapting the neural network, and outputting the processed audio data.

9. The method according to any of the preceding claims, wherein the activation functions are associated solely with nodes of the output layer of the neural network.

10. The method according to any of the preceding claims, wherein adapting the activation functions is at least partly based on the first audio data received via a microphone of the audio device.

11. The method according to any of the preceding claims, wherein the one or more characteristic values comprises a first set related to the sound environment, and/or a second set related to a device characteristic of the audio device, and/or a third set related to a user preference set by a user of the audio device, wherein the characteristic values used for determining the one or more nodes to be adapted is the first set, the second set, the third set or any combination thereof.

12. The method according to the preceding claim, wherein the one or more characteristic values comprise a fourth set related to data transmission effects, such as a signal-to-noise ratio wherein the characteristic values used for determining the one or more nodes to be adapted is the first set, the second set, the third set, the fourth set or any combination thereof.

13. The method according to the preceding claim, wherein the one or more characteristic values comprises a fifth set related to the first audio data and/or a sixth set related to the second audio data, wherein the characteristic values used for determining the one or more nodes to be adapted is the first set, the second set, the third set, the fourth set, the fifth set, the sixth set or any combination thereof.

14. The method according to claims 11, 12 or 13, wherein a first set of coefficients are defined/determined for each of the first set of characteristic values, and/or wherein a second set of coefficients are defined/determined for each of the second set of characteristic values, and/or wherein a third set of coefficients are defined/determined for each of the third set of characteristic values, and/or wherein a fourth set of coefficients are defined/determined for each of the fourth set of characteristic values, and/or wherein a fifth set of coefficients are defined/determined for each of the fifth set of characteristic values, and/or wherein a sixth set of coefficients are defined/determined for each of the sixth set of characteristic values.

15. An audio device comprising a processor, and a memory, wherein the audio device is configured for performing the method according to any of claims 1-14.

100

Fig. 1
PRIOR ART

200

```
┌─────────────────────┐
│ 202                 │
└─────────────────────┘
          │
          ▼
┌─────────────────────┐
│ 204                 │
└─────────────────────┘
          │
          ▼
┌─────────────────────┐
│ 206                 │
└─────────────────────┘
          │
          ▼
┌─────────────────────┐
│  208                │
└─────────────────────┘
          │
          ▼
┌─────────────────────┐
│ 210                 │
└─────────────────────┘
```

*Fig. 2*

300

310

309

312

314

306

308

304

Fig. 3

402

| ReLu |
| Tanh |
| Sigmoid |
| Linear |
| Identity |

*Fig. 4*

504

504'

506

502

504''

506''

*Fig. 5*

Fig. 6

Europäisches Patentamt

European Patent Office

Office européen des brevets

# EUROPEAN SEARCH REPORT

**Application Number**

EP 23 21 8614

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/240239 A1 (SAMSUNG ELECTRONICS CO LTD [KR]) 17 November 2022 (2022-11-17) <br> * page 1, paragraph 6 - page 18, paragraph 102; figures 2,9,10 * <br> * page 26, paragraph 162 * | 1-15 | INV. <br> G10L21/0208 <br> H04R25/00 |
| A | US 2022/201406 A1 (KAMKAR-PARSI HOMAYOUN [DE] ET AL) 23 June 2022 (2022-06-23) <br> * page 1, right-hand column, paragraph 8 - page 4, right-hand column, paragraph 45 * | 1-15 | |
| A | LI BIN ET AL: "The extreme learning machine learning algorithm with tunable activation function", <br> NEURAL COMPUTING AND APPLICATIONS, <br> vol. 22, no. 3-4, <br> 7 February 2012 (2012-02-07), pages 531-539, XP0093027581, <br> London <br> ISSN: 0941-0643, DOI: <br> 10.1007/s00521-012-0858-9 <br> Retrieved from the Internet: <br> URL:http://link.springer.com/article/10.1007/s00521-012-0858-9/fulltext.html> <br> * the whole document * | 1-15 | |

**TECHNICAL FIELDS SEARCHED (IPC)**

G10L
H04S
H04R

The present search report has been drawn up for all claims

| Place of search | Date of completion of the search | Examiner |
|---|---|---|
| The Hague | 17 May 2024 | Burchett, Stefanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 23 21 8614

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2024

| Patent document cited in search report | Publication date | Patent family member(s) | Publication date |
|---|---|---|---|
| WO 2022240239 A1 | 17-11-2022 | EP 4102409 A1 | 14-12-2022 |
| | | US 2022375462 A1 | 24-11-2022 |
| | | WO 2022240239 A1 | 17-11-2022 |
| US 2022201406 A1 | 23-06-2022 | DE 102020216439 A1 | 23-06-2022 |
| | | JP 7477114 B2 | 01-05-2024 |
| | | JP 2022098490 A | 01-07-2022 |
| | | US 2022201406 A1 | 23-06-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. R. DUBEY et al.** A survey on modern trainable activation functions. *Neurocomputing, and more modern trainable activation functions can be found*

- **A. APICELLA et al.** *Neural Networks*, 2021, vol. 138, 14-32